(19) **Europäisches Patentamt**
**European Patent Office**
**Office européen des brevets**

(11) **EP 4 365 137 A1**

(12) **EUROPEAN PATENT APPLICATION**

(43) Date of publication:
**08.05.2024 Bulletin 2024/19**

(21) Application number: **22205093.2**

(22) Date of filing: **02.11.2022**

(51) International Patent Classification (IPC):
**C01G 45/02** (2006.01)    **H01M 4/505** (2010.01)

(52) Cooperative Patent Classification (CPC):
**C01G 45/02; H01M 4/505; H01M 10/0525;**
C01P 2004/64

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventors:
- **DOMASCHKE, Maximilian**
**67056 Ludwigshafen am Rhein (DE)**
- **EBERLE, Felix**
**67056 Ludwigshafen am Rhein (DE)**

(74) Representative: **BASF IP Association**
**BASF SE**
**GBI-C006**
**67056 Ludwigshafen (DE)**

(54) **PROCESS FOR MAKING AN OXIDE OF MANGANESE**

(57)     Process for making a nanoparticulate manganese oxide of the formula $Mn_xO_y$ with x being integers in the range of from 1 to 3 and y being integers in the range of from 2 to 4, and x < y, said process comprising the following steps:
(a) melting manganese metal under a non-oxidizing atmosphere,
(b) withdrawing a vapor over the molten manganese, said vapor comprising manganese in gaseous form and the gas from the non-oxidizing atmosphere,
(c) mixing the vapor withdrawn in step (b) with an oxidizing gas selected from oxygen-depleted air with at least 5 % by volume of oxygen, air, oxygen and oxygen-enriched air, thereby forming an oxide of manganese,
(d) cooling the gas containing said oxide of manganese.

EP 4 365 137 A1

**Description**

The present invention is directed to a process for making a nanoparticulate manganese oxide of the formula $Mn_xO_y$ with x being integers in the range of from 1 to 3 and y being integers in the range of from 2 to 4, and x < y, said process comprising the following steps:

(a) melting manganese metal under a non-oxidizing atmosphere,
(b) withdrawing a vapor over the molten manganese, said vapor comprising manganese in gaseous form and the gas from the non-oxidizing atmosphere,
(c) mixing the vapor withdrawn in step (b) with an oxidizing gas selected from oxygen-depleted air with at least 5 % by volume of oxygen, air, oxygen and oxygen-enriched air, thereby forming an oxide of manganese,
(d) cooling the gas containing said oxide of manganese.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides.

The cathode material is of crucial importance for the properties of a lithium ion battery. Lithium-containing mixed transition metal oxides have gained particular significance, for example spinels and mixed oxides of layered structure, especially lithium-containing mixed oxides of nickel, manganese and cobalt; see, for example, EP 1 189 296. Such lithium-containing mixed oxides of nickel, manganese and cobalt are generally prepared in a two-stage process. In a first stage, a sparingly soluble salt of the transition metal(s) is prepared by precipitating it from a solution, for example a carbonate or a hydroxide. This sparingly soluble compound is in many cases also referred to as a precursor. In a second stage, the precursor is mixed with a lithium compound, for example $Li_2CO_3$, LiOH or $Li_2O$, and calcined at high temperatures, for example at 600 to 1100°C.

In the precursor manufacturing process, when performed by (co-)precipitation, usually the sulfates of transition metals such as nickel, cobalt and manganese are used as starting materials. This leads, however, to the formation of stoichiometric amounts of alkali metal sulfates. The stoichiometric amounts of sulfate are undesired by-products that need to be disposed of.

In WO 2019/191837, a process is disclosed wherein cathode active materials are made from precursors that are made by oxidation of metals and simultaneous precipitation. The process, however, leads to disadvantages when manganese is present because under the prevailing alkaline conditions, manganese may be precipitated as $MnO_2$ that is not incorporated well into the precursor. In addition, the magnetic separation as suggested for the removal of unreacted metals does not work for many materials such as, but not limited to aluminum and manganese. It is thus a challenge to provide manganese in form of a compound that can be incorporated evenly and easily into a precursor without using a sulfate or related compound.

It was therefore an objective of the present invention to provide a process that fulfils the above requirements.

Accordingly, the process defined at the outset has been found, hereinafter also referred to as inventive process or process according to the (present) invention. The inventive process may be carried out as a batch process or as a continuous or semi-batch process.

The inventive process comprises steps (a) to (d), hereinafter also referred to as (a), (b), (c) or (d), respectively. Steps (a) to (d) shall be described in more detail below.

In step (a), manganese metal is molten under a non-oxidizing atmosphere. The manganese metal may have any shape when provided at the beginning of step (a), for example briquets, chunks, flakes, powder, cubes, or chips. In embodiments wherein the manganese metal contains some oxide, for example as a passivation layer, said oxide will swim on the manganese melt and may be reduced or removed. An oxygen content of from 0.02 to 0.5% by weight is acceptable.

In a preferred embodiment of the present invention, step (a) starts off from manganese that is of high purity, for example 99.7% or more, preferably 99.9% or more, more preferably 99.99% or more. Purification methods are hydrometallurgy and electrowinning. It is preferred to start off from manganese that contains less than 20 ppm of selenium, more preferably 0.1 to 10 ppm selenium. It is furthermore preferred to start off from manganese that contains less than 200 ppm arsenic, more preferably 1 to 100 ppm. Furthermore, it is preferred to start off from manganese that contains less than 1000 ppm of lead, for example 0.5 to 100 ppm. In this context, ppm and % refer to ppm or % by weigh, respectively. The inventive process may start off from manganese that contains off from 50 to 1000 ppm of iron.

In order to melt said manganese metal, it is heated to a temperature above its melting point that is 1519 K (1246°C). The boiling point should not be exceeded so by performing step (a) liquid manganese is obtained. At normal pressure, the boiling point of manganese is 2373 K (2100°C).

Step (a) is performed under a non-oxidizing atmosphere, for example nitrogen or noble gasses such as argon, or combinations of nitrogen and a noble gas such as argon.

In a preferred embodiment of the present invention, the purity of said non-oxidizing atmosphere is 99.9 % by volume or higher, more preferable 99.99 % or higher, to avoid the presence of larger amounts of $O_2$, $CO_2$ or $H_2O$.

In one embodiment of the present invention, step (a) is performed in a furnace, for example a blast furnace or an electrical furnace. Examples of electrical furnaces are arc furnaces and preferably induction furnaces. Crucibles suitable for induction furnaces in step (a) may be made from refractory materials such as, but not limited to graphite, silicon carbide and alumina.

In induction furnaces, the operating frequency is preferably in the so-called low-frequency range, e.g., 50 to 500 Hz, to allow a sufficient penetration depth into the crucible.

Over the melt, a certain atmosphere will develop in the course of step (a) located over the molten manganese. Said atmosphere will contain gaseous manganese and non-oxidizing gas such as nitrogen or noble gas. The higher the temperature of the melt, the higher will be the partial pressure of manganese. Depending on the temperature, the percentage of manganese will be higher. Preferably, such atmosphere will develop in the headspace of the furnace.

In one embodiment of the present invention, step (a) is performed under ambient pressure or a pressure close to ambient pressure, for example 0.5 to 1.5 bar (abs.).

Step (b) of the inventive process includes withdrawing a vapor over the molten manganese, said vapor comprising manganese in gaseous form and the gas from the non-oxidizing atmosphere. Said withdrawal is preferably performed without allowing the vapor to cool down by more than 100°C, more preferably without cooling down by a measurable interval. Cooling down is limited or preferably prevented in order to avoid condensation of manganese.

In one embodiment of the present invention, step (a) is performed under ambient or close to pressure, for example 0.5 to 1.5 bar, and step (b) is the performed by opening a gauge to allow atmosphere containing non-oxidizing gas and manganese to leave the vessel wherein step (a) is performed.

In one embodiment of the present invention, the mean residence time of the gas atmosphere in the headspace before withdrawal is in the range from 1 second to 5 minutes.

In one embodiment of the present invention, step (b) is performed pulse-wise. A pulse may have a duration 1 to 10 seconds, and the time between two pulses may be in the range of from in the range of from 10 to 100 seconds.

In another embodiment, step (b) is performed continuously.

In one embodiment of the present invention, after removal of gas, fresh non-oxidizing is added into the furnace. The fresh non-oxidizing gas - e.g., nitrogen or argon - may be pre-heated to the temperature at which step (a) is performed, or it may have a temperature that is somewhat lower, e.g., lower by 5 to 100°C.

In another embodiment of the present invention, step (b) and step (c) are performed continuously, for example by passing a stream of non-oxidizing gas through the furnace over the surface of the molten manganese and simply collecting the metal-vapor containing gas in another vessel.

Step (c) comprises mixing the vapor withdrawn in step (b) with an oxidizing gas selected from oxygen-depleted air with at least 5 % by volume of oxygen, air, oxygen and oxygen-enriched air, thereby forming an oxide of manganese. Preferred are air and oxygen-enriched air. A preferred volume ratio of oxidizing to non-oxidizing gas is from 30:1 to 1000:1, determined under normal conditions.

Said mixing is performed in a place separated from the space over the molten manganese. For example, it is possible to perform step (c) - and step (b) - simultaneously by transferring, e.g., sucking, the vapor from step (b) through an orifice into injector that contains said oxidizing gas. Such injectors may be manufactured from common stainless steel qualities.

It is preferred that said injector is thermally insulated against the high temperature of the headspace of the furnace.

In one embodiment, said injector has a coaxial arrangement of the two gas flows, for example as an array comprising two coaxial tubes. Vapor withdrawn in step (b) serves as first fluid and is introduced into the injector from the outer zone. Oxidizing gas as the second fluid is introduced through the inner zone. Both fluids are then contacted at the end, especially at the tip of the coaxial tubes.

In one embodiment of the present invention, step (c) is performed under turbulent conditions. Such turbulent conditions may be achieved by a very high velocity of the stream of oxidizing gas, ranging from 100 m/s to sonic speed under the condition present in the injector.

In one embodiment of the present invention, especially when step (c) is performed under turbulent conditions, the duration of step (c) is in the range of from 0.1 to 100 seconds.

By mixing oxidizing gas and vapor from step (b), oxidation of manganese is performed, and an oxide of manganese is formed. The stoichiometry of the resulting oxide of manganese depends on various parameters, e.g., the ratio of oxidizing gas to manganese gas, temperature and duration of step (c). The stoichiometry may be, e.g., $Mn_2O_3$, $Mn_3O_4$, or correspond to a mixture of the aforementioned. $MnO_2$ may be generated by the inventive process but this is not preferred for battery applications. Preferably, the number of oxygen atoms in the resultant manganese oxide is higher than the number of manganese atoms.

The reaction of manganese vapor with oxygen will be highly exothermal, with the reaction enthalpy being released into the gas atmosphere around the forming manganese oxide particles by convection, which is very effective at high degrees of turbulence.

Step (d) includes cooling the gas containing said oxide of manganese, for example to a temperature in the range of from 200 to 250°C. At such a temperature, the oxidation reaction slows down or is even quenched and seed crystals of manganese oxide are generated, and the resultant manganese oxide precipitates by condensation.

Steps (c) and (d) are preferably performed simultaneously.

In one embodiment of the present invention, in step (d), nanoparticles of manganese oxide are formed. In the context of the present invention, the term nanoparticles refers to powder with an average particle diameter (median, D50) in the range of from 2 to 100 nm, preferably from 10 to 50 nm. The span of the resultant powder, defined as (D90 - D10) divided by D50, may be in the range of from 0.5 to 2. Due to the small size of the particles the tendency to form loose agglomerates will be high. The diameter refers to the primary particles.

In one embodiment of the present invention, step (d) is followed by collecting nanoparticular manganese oxide through a bag filter or an electrostatic precipitator. Said nanoparticulate powder is excellently suited for making cathode active materials for lithium ion batteries, especially those with at least 50 mol-% of manganese.

Examples are high-voltage spinels, e.g., $LiNi_{0.25}Mn_{0.75}O_4$, and so-called high-manganese NCM of the general formula $Li_{1+e}TM_{1-e}O_2$ wherein e is in the range of from 0.1 to 0.25 and TM is a combination of elements according to general formula (I) $(Ni_aCo_bMn_c)_{1-d}M^1_d$ (I) wherein

a is in the range of from 0.30 to 0.38,
b is in the range of from zero to 0.05,
c is in the range of from 0.60 to 0.70, and
d is in the range of from zero to 0.05,

$M^1$ is selected from Al, Ti, Zr, W, Mo, Mg, B, and combinations of at least two of the foregoing,

$$a + b + c = 1.$$

The present invention is further illustrated by a working example and two drawings.

Set-up A: a laboratory inductive furnace with an effective crucible volume of one liter and equipped with an injector and with a three-way valve (a T-valve), leading one stream to bag filters (filter unit) and one to a by-pass

Step (a.1):
Set-up A is charged with manganese powder, median particle diameter (D50) 50 μm, so that the crucible is filled by ¾. The furnace is heated to 1400°C within one hour. The atmosphere above the manganese powder is set to pure argon (more than 99.9% by weight) by flushing with a stream of 1 l/min. The argon exits the furnace via the injector, which is during step (a.1) not fed with oxidizing gas. The T-valve is set in a way that the filter unit is passed by. At 1519 K, the manganese melts.

Step (b.1):
Once all the manganese in the crucible is molten, manganese vapor will develop in increasing quantities. The manganese vapor is continuously carried to the injector by the argon stream. A flow of air as oxidizing gas through the injector is started and set to 100 l/min. The T-valve is switched to the filter unit. The air has a temperature of 25°C.

Steps (c.1) and (d.1):
The presence of oxygen in the injector starts the exothermal oxidation of the manganese vapor and, at simultaneously, cools the gas coming from the furnace, initiating the formation of manganese oxide particles.

The particle-containing gas generated in step (c.1) is then passed through a heat exchanger for further cooling to 200 to 250°C. A nanoparticulate powder is formed and collected in a bag filter. A powder of the general formula $Mn_2O_3$ is obtained, D50: 25 nm.

## Claims

1. Process for making a nanoparticulate manganese oxide of the formula $Mn_xO_y$ with x being integers in the range of from 1 to 3 and y being integers in the range of from 2 to 4, and x < y, said process comprising the following steps:

   (a) melting manganese metal under a non-oxidizing atmosphere,
   (b) withdrawing a vapor over the molten manganese, said vapor comprising manganese in gaseous form and the gas from the non-oxidizing atmosphere,
   (c) mixing the vapor withdrawn in step (b) with an oxidizing gas selected from oxygen-depleted air with at least 5 % by volume of oxygen, air, oxygen and oxygen-enriched air, thereby forming an oxide of manganese,
   (d) cooling the gas containing said oxide of manganese.

2. Process according to claim 1 wherein the atmosphere in step (a) is selected from nitrogen and a noble gas.

3. Process according to claim 1 or 2 wherein step (c) is performed by sucking the vapor from step (b) through an orifice of an injector and injecting it into a vessel that contains said oxidizing gas.

4. Process according to any of the preceding claims in step (d), nanoparticles of manganese oxide are formed.

5. Process according to any of the preceding claims wherein said nanoparticulate manganese oxide is comprised from particles of manganese oxide with an average diameter (median, D50) in the range of from 2 to 100 nm.

6. Process according to any of the preceding claims wherein step (d) is followed by collecting nanoparticular manganese oxide through a bag filter or an electrostatic precipitator.

7. Process according to any of the preceding claims wherein step (c) is performed under turbulent conditions.

8. Process according to claim 7 wherein the duration of step (c) is in the range of from 0.1 to 100 seconds.

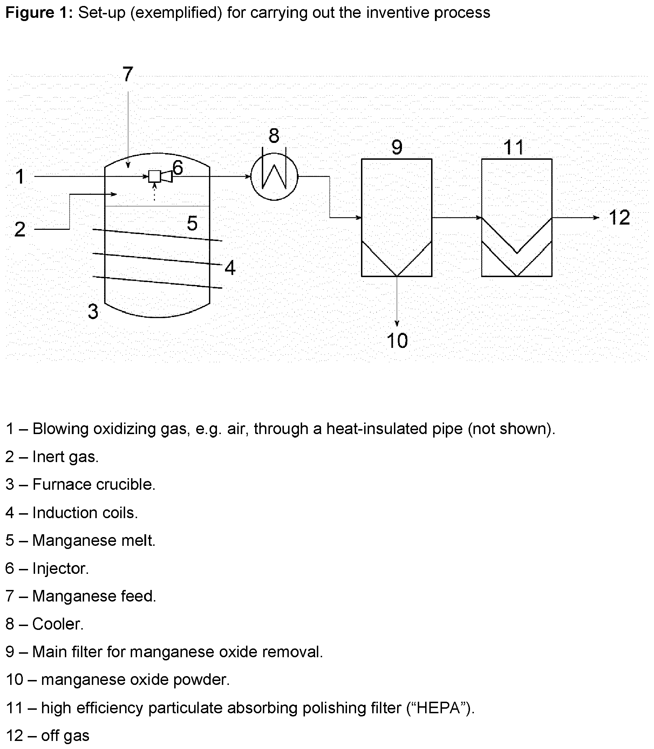

**Figure 1:** Set-up (exemplified) for carrying out the inventive process

1 – Blowing oxidizing gas, e.g. air, through a heat-insulated pipe (not shown).

2 – Inert gas.

3 – Furnace crucible.

4 – Induction coils.

5 – Manganese melt.

6 – Injector.

7 – Manganese feed.

8 – Cooler.

9 – Main filter for manganese oxide removal.

10 – manganese oxide powder.

11 – high efficiency particulate absorbing polishing filter ("HEPA").

12 – off gas

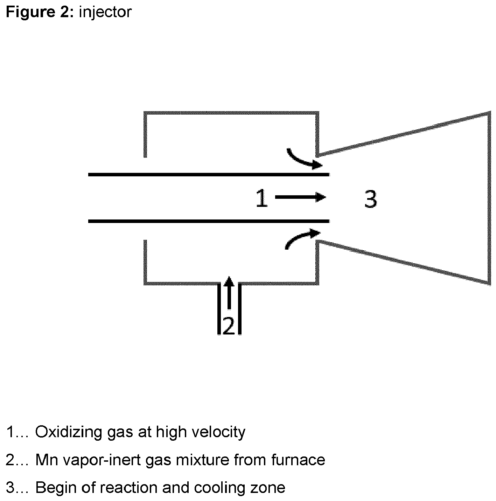

**Figure 2:** injector

1... Oxidizing gas at high velocity

2... Mn vapor-inert gas mixture from furnace

3... Begin of reaction and cooling zone

Europäisches
Patentamt

European
Patent Office

Office européen
des brevets

## EUROPEAN SEARCH REPORT

Application Number

EP 22 20 5093

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 553 574 A (NINGBO GUANGXIN NANOMETER MAT CO LTD) 26 March 2021 (2021-03-26) * abstract; examples * | 1-8 | INV. C01G45/02 H01M4/505 |
| A | CHEN C Y ET AL: "Characterization of nanocrystalline manganese oxide powder prepared by inert gas condensation", CERAMICS INTERNATIONAL, ELSEVIER, AMSTERDAM, NL, vol. 34, no. 7, 12 August 2007 (2007-08-12), pages 1661-1666, XP023521870, ISSN: 0272-8842, DOI: 10.1016/J.CERAMINT.2007.05.013 [retrieved on 2008-08-04] * "Manganese oxide powder preparation" * | 1-8 | |
| A | JP S62 148326 A (MIZUSHIMA GOUKINTETSU KK) 2 July 1987 (1987-07-02) * abstract; example 1 * | 1-8 | TECHNICAL FIELDS SEARCHED (IPC) C01G H01M |

The present search report has been drawn up for all claims

| Place of search | Date of completion of the search | Examiner |
|---|---|---|
| Munich | 19 April 2023 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5093

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | | Publication date | Patent family member(s) | Publication date |
|---|---|---|---|---|
| CN 112553574 | A | 26-03-2021 | NONE | |
| JP S62148326 | A | 02-07-1987 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1189296 A
- WO 2019191837 A